# EUROPEAN PATENT APPLICATION

(11) **EP 4 187 631 A1**
(43) Date of publication of application: **31.05.2023**
(21) Application number: 22209495.5
(22) Date of filing: 24.11.2022
(51) Int. Cl.: H01M 4/04, H01M 4/134, H01M 4/1395, H01M 4/38, H01M 4/505, H01M 4/525, H01M 4/66, H01M 10/052, H01M 10/0569, H01M 10/0585, H01M 4/36, H01M 4/02, H01M 4/62

(54) **ANODE FOR LITHIUM SECONDARY BATTERY, METHOD OF FABRICATING THE SAME AND LITHIUM SECONDARY BATTERY INCLUDING THE SAME**

(30) Priority: 25.11.2021 KR 20210164034
(71) Applicant: SK On Co., Ltd., Seoul 03161 (KR)
(72) Inventor: JEONG, Kwang Ho, 34124 Daejeon (KR); KIM, Sung Do, 34124 Daejeon (KR)
(74) Representative: Stolmár & Partner Patentanwälte PartG mbB

(57) **Abstract**

An anode for a lithium secondary battery according to an embodiment of the present invention includes an anode current collector, a primer layer formed on a surface of the anode current collector, and an anode active material layer including a first anode active material layer and a second anode active material layer sequentially disposed on the primer layer. Each of the first anode active material layer and the second anode active material layer includes a silicon-based active material. A ratio of a content of the silicon-based active material in the second anode active material layer relative to a content of the silicon-based active material in the first anode active material layer among a total content of the silicon-based active material included in the anode active material layer is greater than 1.25 and less than 5.

## Description

### BACKGROUND

### 1. Field

The present invention relates to an anode for a lithium secondary battery, a method of fabricating the same, and a lithium secondary battery including the same. More particularly, the present invention relates to an anode including a multi-layered anode active material layer, a method of fabricating the same and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid automobile.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

Recently, as an electric vehicle industry is being developed, a high-capacity lithium secondary battery is also being developed to enable long-distance operation with a single charge. To provide a high-capacity anode, a silicon-based anode active material is being used. The silicon-based anode active material may provide an increased capacity, but may have a low conductivity to increase a resistance of the anode.

Thus, researches for developing an anode having a reduced electrical resistance while having an increased capacity are conducted by using the silicon-based anode active material. For example, Korean Published Patent Application No. 10-2020-0055448 discloses a multi-layered anode including a silicon-based compound, which may not provide sufficient low-resistance properties.

### SUMMARY

According to an aspect of the present invention, there is provided an anode for a lithium secondary battery having improved capacity and electrical property.

According to an aspect of the present invention, there is provided a method of fabricating an anode for a lithium secondary battery having improved capacity and electrical property.

According to an aspect of the present invention, there is provided a lithium secondary battery having improved capacity, electrical property and cycle property.

An anode for a lithium secondary battery includes an anode current collector, a primer layer formed on a surface of the anode current collector, and an anode active material layer including a first anode active material layer and a second anode active material layer sequentially disposed on the primer layer. Each of the first anode active material layer and the second anode active material layer includes a silicon-based active material. A ratio of a content of the silicon-based active material in the second anode active material layer relative to a content of the silicon-based active material in the first anode active material layer among a total content of the silicon-based active material included in the anode active material layer is greater than 1.25 and less than 5. The first anode active material layer and the second anode active material layer each includes at least one binder selected from the group consisting of polyacrylic acid, polyvinyl alcohol, polyacrylonitrile, polyacrylamide, polyvinyl acetate and a copolymer thereof.

In some embodiments, the ratio of the content of the silicon-based active material in the second anode active material layer relative to the content of the silicon-based active material in the first anode active material layer among the total content of the silicon-based active material included in the anode active material layer may be 2 or more, and less than 5.

In some embodiments, the primer layer may include a styrene-butadiene rubber.

In some embodiments, an average loading weight of the primer layer may be in a range from 0.1% to 20% of a total electrode loading weight.

In some embodiments, an average loading weight of the primer layer may be in a range from 0.5% to 10% of a total electrode loading weight.

In some embodiments, the primer layer may not include a conductive material.

In some embodiments, the silicon-based active material may include at least one selected from the group consisting of silicon (Si), a silicon alloy, a silicon oxide, a silicon-carbon (Si-C) composite and a silicon alloy-based carbon composite.

In some embodiments, a content of the silicon-based active material based on a total weight of the anode active material layer may be in a range from 1 wt% to 20 wt%.

In some embodiments, a content of the silicon-based active material based on a total weight of the anode active material layer may be in a range from 4 wt% to 15 wt%.

In some embodiments, each of the first anode active material layer and the second anode active material layer further includes a carbon-based active material.

In some embodiments, a content of the carbon-based active material in a total weight of the first anode active material layer is greater than a content of the carbon-based active material in a total weight of the second anode active material layer.

A lithium secondary battery includes the anode for a lithium secondary battery according to embodiments as described above, and a cathode facing the anode.

In a method of fabricating an anode for a lithium secondary battery, a primer solution, a first anode slurry and a second anode slurry are prepared. Each of the first and second anode slurry includes a silicon-based active material. The primer solution, the first anode slurry and the second anode slurry are sequentially and continuously coated on a current collector to form a preliminary primer layer, a preliminary first anode active material layer and a preliminary second anode active material layer. The preliminary primer layer, the preliminary first anode active material layer and the preliminary second anode active material layer are dried and pressed to form a primer layer and an anode active material layer including a first anode active material layer and a second anode active material layer. A ratio of a content of the silicon-based active material in the second anode active material layer relative to a content of the silicon-based active material in the first anode active material layer among a total content of the silicon-based active material included in the anode active material layer is greater than 1.25 and less than 5.

In some embodiments, the ratio of the content of the silicon-based active material in the second anode active material layer relative to the content of the silicon-based active material in the first anode active material layer among the total content of the silicon-based active material included in the anode active material layer may be 2 or more, and less than 5.

In some embodiments, the primer solution may include a solvent and a styrene-butadiene rubber.

In some embodiments, the primer solution may further include a thickener.

In some embodiments, the first anode slurry and the second anode slurry may each include a binder that includes at least one selected from the group consisting of polyacrylic acid, polyvinyl alcohol, polyacrylonitrile, polyacrylamide, polyvinyl acetate and a copolymer thereof.

In some embodiments, the primer solution may include a binder, and the binder included in the primer layer may be migrated to the anode active material layer while forming the anode active material layer.

According to embodiments of the present invention, an anode for a lithium secondary battery fabricated by the method as described above is provided. Further, a lithium secondary battery including the anode for a lithium secondary battery fabricated by the above-described method is also provided.

According to embodiments of the present invention, an anode for a lithium secondary battery includes an anode active material layer having a multi-layered structure. The anode active material layer includes a silicon-based active material, and includes a primer layer, a first anode active material layer, and a second anode active material layer sequentially formed on a surface of an anode current collector. A ratio of a content of the silicon-based active material included in the second anode active material layer relative to a content of the silicon-based active material included in the first anode active material layer may be adjusted, so that high-capacity and low-resistance properties of the anode may be enhanced.

In exemplary embodiments, the anode active material layer may include a specific binder to improve life-span and cycle properties of the battery by alleviating expansion and contraction of the silicon-based active material during charging and discharging.

In exemplary embodiments, a primer solution for forming the primer layer may include a solvent and styrene-butadiene rubber, and may easily induce a binder migration with an anode active material slurry. Accordingly, an electrode may be designed to contain a large amount of styrene-butadiene rubber at an interface between the primer layer and the anode current collector/the anode active material layer.

In exemplary embodiments, the primer solution, a first anode active material slurry and a second anode active material slurry may be continuously applied on the surface of the anode current collector, and simultaneously dried to improve an adhesion between the anode current collector and the anode active material layer. Thus, life-span properties of the battery may be further improved.

### BRIEF DESCRIPTION OF THE DRAWINGS

FIG. 1 is a schematic cross-sectional view illustrating an anode for a lithium secondary battery in accordance with exemplary embodiments.
FIGS. 2 and 3 are a schematic plan view and a schematic cross-sectional view, respectively, illustrating a lithium secondary battery in accordance with exemplary embodiments.

### DETAILED DESCRIPTION OF THE EMBODIMENTS

According to embodiments of the present invention, there is provided an anode including an anode active material layer that has a multi-layered structure including a primer layer, and a lithium secondary battery including the anode.

Hereinafter, the present invention will be described in detail with reference to exemplary embodiments and the accompanying drawings. However, those skilled in the art will appreciate that such embodiments described with reference to the accompanying drawings are provided to further understand the spirit of the present invention and do not limit subject matters to be protected as disclosed in the detailed description and appended claims.

The terms "first" and "second" used herein do not limit the number or an order of objects, but are relatively used to distinguish different elements.

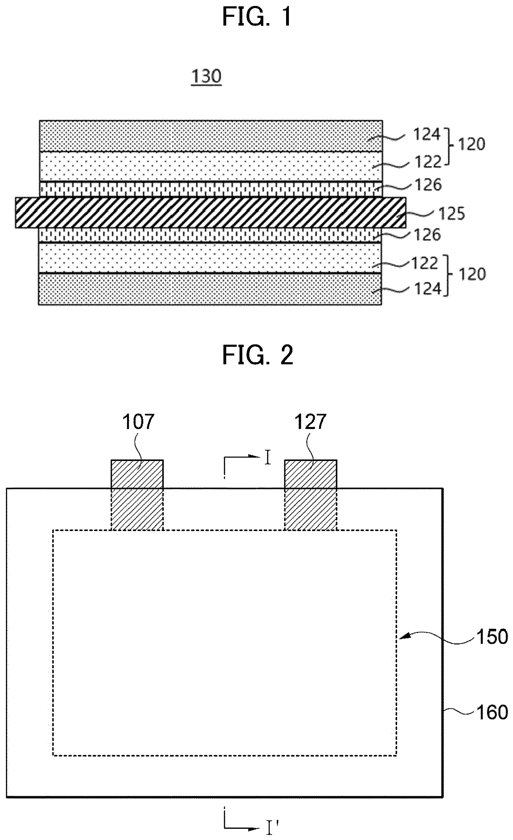

FIG. 1 is a schematic cross-sectional view illustrating an anode for a lithium secondary battery in accordance with exemplary embodiments.

Referring to FIG. 1, an anode 130 includes an anode current collector 125, a primer layer 126 formed by coating a primer solution on the anode current collector 125, and an anode active material layer 120 stacked on the primer layer 126.

The anode active material layer 120 may have a multi-layered structure (e.g., a double-layered structure) including a plurality of anode active material layers. According to embodiments of the present invention, the anode active material layer 120 includes a first anode active material layer 122 and a second anode active material layer 124.

The multi-layered structure of the anode active material layer 120 may be used to improve an interlayer adhesion of the anode. Accordingly, an electrode stability may be improved to enhance cycle and life-span properties. Further, the primer layer 126 may be formed between the anode active material layer 120 and the anode current collector 125, so that the adhesion of the anode active material layer 120 may be further improved, and life-span properties of the electrode may be improved.

For example, the anode current collector 125 may include gold, stainless steel, nickel, aluminum, titanium, copper or an alloy thereof, preferably copper or a copper alloy.

The primer layer 126 may be formed on at least one surface of the anode current collector 125. The primer layer 126 may be coated on each of upper and lower surfaces of the anode current collector 125. The primer layer 126 may directly contact the surface of the anode current collector 125.

In exemplary embodiments, the anode active material layer 120 may be formed on the primer layer 126. The first anode active material layer 122 may be directly formed on the surface of the primer layer 126, and the second anode active material layer 124 may be formed directly on the surface of the first anode active material layer 122.

In some embodiments, the primer layer 126 may include a styrene-butadiene rubber (SBR). The primer layer 126 may be in direct contact with the anode current collector 125 to serve as a coating layer, and may include the styrene-butadiene rubber to improve the adhesion between the anode current collector 125 and the anode active material layer 120.

In some embodiments, the primer layer 126 may not include a conductive material. When a conductive material is included in the primer layer 126, a dispersing agent such as polyvinylpyrrolidone (PVP) is included to disperse the conductive material. In this case, the primer layer 126 may be thickened and the primer layer 126 may act as an insulating layer, thereby degrading the performance of the electrode.

Accordingly, in exemplary embodiments of the present invention, the primer layer 126 may be formed using the primer solution that may not include the conductive material. For example, the primer solution may include a solvent and the styrene-butadiene rubber without including the conductive material.

In an embodiment, the primer solution may include, e.g., a trace amount of carboxymethyl cellulose (CMC) as a thickener to enhance viscosity.

As the primer layer 126 is formed, migration of a first anode active material slurry and a binder may be naturally induced. Thus, a relatively large amount of the styrene-butadiene rubber may be included at an interface between the primer layer 126 and the anode current collector 125/the first anode active material layer 122. Accordingly, the adhesion between the anode active material layer 120 and the anode current collector 125 may be further improved, and structural stability and life-span properties of the battery may be improved.

In some embodiments, an average loading amount of the primer layer 126 may be in a range from 0.5% to 20% of a total loading amount of the anode 130, preferably in a range from 0.5% to 10%. In the above range, adhesion may be improved while preventing an electrode performance degradation due to insulating properties of the primer layer 126.

The first anode active material layer 122 and the second anode active material layer 124 may include a first anode active material and a second anode active material, respectively. The first anode active material and the second anode active material may include a silicon-based active material. A silicon-based active material included in the first anode active material layer 122 and a silicon-based active material included in the second anode active material layer 124 may be the same as or different from each other.

For example, the silicon-based active material may include silicon (Si), a silicon alloy, a silicon oxide, a silicon-carbon (Si-C) composite or a silicon alloy-based carbon composite. These may be used alone or in combination therefrom.

Preferably, the silicon-based active material may include the silicon oxide. The silicon oxide may include SiOx (0<x<2), and may include a SiOx (0<x<2) containing a lithium or magnesium compound. For example, the SiOx containing the lithium or magnesium compound may include a SiOx (0<x<2) pretreated with lithium or magnesium. For example, the SiOx (0<x<2) including the lithium or magnesium compound may include lithium silicate or magnesium silicate.

In some embodiments, the silicon-carbon (Si-C) composite may include, e.g., silicon carbide (SiC) or silicon-carbon particles having a core-shell structure.

In exemplary embodiments, a ratio of a content of the silicon-based active material included in the second anode active material layer 124 relative to a content of the silicon-based active material included in the first anode active material layer 122 among a total content of the silicon-based active material included in the anode active material layer 120 is greater than 1.25 and less than 5. In the above range, an electrode resistance may be lowered while achieving a high capacity by using the silicon-based active material.

If the content ratio of the silicon-based active material is 5 or more, an imbalance of expansion between the first anode active material layer 122 and the second anode active material layer 124 may be caused when a volume of the electrode is expanded, thereby reducing electrode stability and battery life-span.

If the content ratio of the silicon-based active material is 1.25 or less, the resistance of the anode 130 may not be sufficiently reduced.

Preferably, the ratio of the content of the silicon-based active material included in the second anode active material layer 124 relative to the content of the silicon-based active material included in the first anode active material layer 122 among the total content of the silicon-based active material 120 may be 2 or more and less than 5.

According to the above-described embodiments of the present invention, the content of the silicon active material included in the first anode active material layer 122 and the second anode active material layer 124 may be adjusted based on the total amount of the silicon-based active material included in the anode active material layer 120. Accordingly, an entirely high-capacity and low-resistance structure may be designed for the anode active material layer 120. Additionally, lithiation may be promoted from a surface of the anode 130, so that mobility of lithium ions may be increased, thereby improving rapid charging properties.

In some embodiments, the content of the silicon-based active material based on a total weight of the anode active material layer 120 may be in a range from about 1 wt% to 40 wt%, preferably from about 1 wt% to 20 wt%, more preferably 4 wt% to 15 wt%. Within the above range, a balance between the rapid charging properties and the life-span stability may be properly maintained.

In some embodiments, the content of the silicon-based active material included in the first anode active material layer 122 based on the total weight of the anode active material layer 120 may be in a range from 1 wt% to 10 wt%, preferably from about 1 wt% to 5 wt%.

In some embodiments, the content of the silicon-based active material included in the second anode active material layer 124 based on the total weight of the anode active material layer 120 may be in a range from 1 wt% to 10 wt%, preferably from 2 wt% to 9 wt%.

In the above-described range of the content of the silicon-based active material included in each layer, low resistance properties, rapid charging properties and life-span stability may be achieved as described above.

In some embodiments, each of the first anode active material layer 122 and the second anode active material layer 124 may further include a carbon-based active material.

In some embodiments, a content of the carbon-based active material in a total weight of the first anode active material layer 122 may be greater than a content of the carbon-based active material in a total weight of the second anode active material layer 124.

The carbon-based active material may include, e.g., artificial graphite, natural graphite, hard carbon, soft carbon, coke, carbon black, carbon fiber, etc.

In some embodiments, the carbon-based active material may include artificial graphite or natural graphite. In an embodiment, artificial graphite may be used as the carbon-based active material. Artificial graphite may have relatively improved life-span properties compared to those from natural graphite. Accordingly, deterioration of the electrode life-span and stability of the lithium secondary battery may be prevented.

In some embodiments, a mixture of artificial graphite and natural graphite may be used as the carbon-based active material. In this case, a content of artificial graphite in the mixture may be greater than a content of natural graphite in the mixture. For example, a weight ratio of artificial graphite and natural graphite in the mixture may be in a range from 9:1 to 7:3. Within the above range, additional capacity/power improvement may be obtained from natural graphite while improving mechanical and chemical stability of the anode or the secondary battery from the artificial graphite.

In some embodiments, each of the first anode active material layer 122 and the second anode active material layer 124 may include carbon nanotube (CNT) as a conductive material. Carbon nanotube as a linear conductive material may be included, so that conductivity in the anode active material layer 120 may be more effectively improved, and the rapid charging properties may be further improved through a combination with the silicon-based active material.

In exemplary embodiments, the first anode active material layer 122 and the second anode active material layer 124 may each include a binder such as polyacrylic acid, polyvinyl alcohol, polyacrylonitrile, polyacrylamide, polyvinyl acetate or a copolymer thereof. Mechanical strength may be improved and electrode volume expansion may be efficiently controlled by the binder. Further, excessive increase of a brittleness of the anode active material layer 120 may be prevented.

In some embodiments, the first anode active material layer 122 may include the binder in an amount from 1 wt% to 20 wt% based on the total weight of the first anode active material layer 122. The second anode active material layer 124 may include the binder in an amount from 1 wt% to 20 wt% based on the total weight of the second anode active material layer 124.

If the content of the binder is less than 1 wt%, the volume expansion may not be sufficiently prevented, and cycle properties may be degraded. If the content of the binder exceeds 20 wt%, sufficient capacity increase by the silicone-based active material may not be implemented.

According to embodiments of the present invention, the anode 130 may be manufactured according to methods or processes as described below.

In exemplary embodiments, a primer solution including a styrene-butadiene rubber may be prepared. In a preferable embodiment, the primer solution may not contain a conductive material.

For example, the primer solution may include a solvent and the styrene-butadiene rubber without including the conductive material. In an embodiment, CMC may be included in a trace amount in the primer solution as, e.g., a thickener for providing viscosity.

If the thickener is included in the primer solution, the content of the thickener may be in a range from 0.01 wt% to 5 wt%, preferably from 0.01 wt% to 0.5 wt% based on a total weight of the primer solution. The solvent may include, e.g., distilled water.

A first anode slurry may be prepared by mixing and stirring the first anode active material with a binder, a conductive material and/or a dispersing agent in a solvent. The first anode active material may include the above-described silicon-based active material. The binder may include, e.g., polyacrylic acid, polyvinyl alcohol, polyacrylonitrile, polyacrylamide, polyvinyl acetate or a copolymer thereof. The conductive material may include carbon nanotube (CNT).

In some embodiments, a content of the first anode active material may be in a range from 90 wt% to 98 wt%, a content of the binder may be in a range from about 1 wt% to 5 wt%, and a content of the conductive material may be in a range from about 0.1 wt% to about 5 wt% based on a total solid content of the first anode slurry.

A second anode slurry may be prepared by mixing and stirring the second anode active material with a binder, a conductive material and/or a dispersing agent in a solvent. The second anode active material may include the above-described silicon-based active material. The binder may include, e.g., polyacrylic acid, polyvinyl alcohol, polyacrylonitrile, polyacrylamide, polyvinyl acetate or a copolymer thereof. The conductive material may include carbon nanotube (CNT).

In some embodiments, a content of the second anode active material may be in a range from 90 wt% to 98 wt%, a content of the binder may be in a range from about 1 wt% to 5 wt%, and a content of the conductive material may be in a range from about 0.1 wt% to about 5 wt% based on a total solid content of the first anode slurry.

The primer solution, the first anode slurry and the second anode slurry as prepared above may be sequentially and continuously coated on a current collector to form a preliminary primer layer, a preliminary first anode active material layer and a preliminary second anode active material layer. Thereafter, the preliminary primer layer, the preliminary first anode active material layer and the preliminary second anode active material layer may be dried and pressed to form the primer layer 126 and the anode active material layer 120. The anode active material layer 120 may have a multi-layered structure including the first anode active material layer 122 and the second anode active material layer 124.

As described above, a ratio of an amount of the silicon-based active material included in the second anode active material layer 124 relative to an amount of the silicon-based active material included in the first anode active material layer 122 among a total amount of the silicon-based active material included in the anode active material layer 120 is greater than 1.25 and less than 5, preferably 2 or more and less than 5.

The drying and pressing may be performed simultaneously. When the primer solution is firstly coated and dried, the primer layer 126 may serve as an insulating layer. Thus, a resistance of the anode 130 may be increased, and an adhesion may be decreased. Therefore, according to exemplary embodiments, the primer solution and the anode slurry may be sequentially and continuously applied and then dried simultaneously.

In some embodiments, while the anode active material layer 120 is formed, the binder included in the primer layer 126 may migrate to the anode active material layer 120. The primer layer 126 may include the SBR as a main component without including the conductive material.

Accordingly, the binder migration with the slurry of the anode active material layer 120 may be naturally induced, and an amount of the styrene-butadiene rubber at an interface between the primer layer 120 and the anode current collector 125/the anode active material layer 120 may be increased. Thus, an interlayer adhesion in the anode 130 may be improved, and life-span properties of the electrode and the battery may be further improved.

According to the above-described exemplary embodiments, the first anode active material layer 122 and the second anode active material layer 124 may each include silicon oxide (SiOx, 0<x<2). Additionally, the ratio of the silicon oxide content of the second anode active material layer 124 relative to the first anode active material layer 122 may be adjusted, so that high capacity/rapid charging properties of the anode 130 and low resistance properties of the electrode may be balanced and improved.

Further, the first anode active material layer 122 and the second anode active material layer 124 may contain the above-described binder to suppress expansion and contraction of the silicon-based active material while being charged and discharged so that the life-span and cycle properties of the battery may be improved.

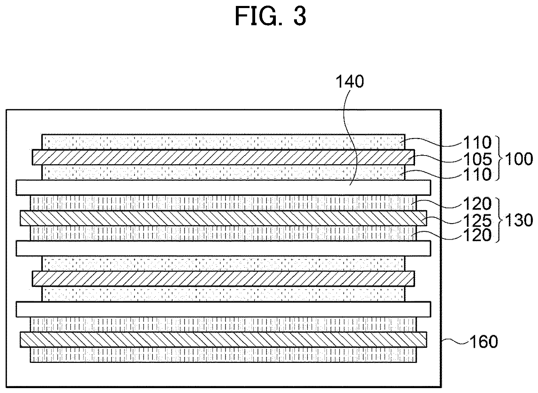

FIGS. 2 and 3 are a schematic plan view and a schematic cross-sectional view, respectively, illustrating a lithium secondary battery in accordance with exemplary embodiments.

Referring to FIGS. 2 and 3, the lithium secondary battery includes a cathode 100 and an anode 130, and may further include a separation layer 140 interposed between the cathode 100 and the anode 130.

The cathode 100 may include a cathode active material layer 110 formed by coating a cathode active material to the cathode current collector 105. The cathode active material may include a compound capable of reversibly intercalating and de-intercalating lithium ions.

In exemplary embodiments, the cathode active material may include lithium-transition metal composite oxide particles. For example, the lithium-transition metal composite oxide particles may include nickel (Ni), and may further include at least one of cobalt (Co) and manganese (Mn).

For example, the lithium-transition metal composite oxide particles may be represented by Chemical Formula 1 below.

[Chemical Formula 1] LiₓNi_{1-y}M_{y}O_{2+z}

In Chemical Formula 1, 0.9≤x≤1.2, 0≤y≤0.7, and -0.1≤z≤0.1. M may include at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

In some embodiments, a molar ratio or a concentration (1-y) of Ni in Chemical Formula 1 may be 0.8 or more, and may preferably exceed 0.8.

Ni may serve as a transition metal related to power and capacity of the lithium secondary battery. Therefore, as described above, the high-Ni composition in the lithium-transition metal composite oxide particle may be employed, so that a high-capacity cathode and a high-capacity lithium secondary battery may be implemented.

However, as the content of Ni increases, long-term storage stability and life-span stability of the cathode or the secondary battery may be relatively deteriorated. In exemplary embodiments, life-span stability and capacity retention may be improved by the introduction of Mn while maintaining electrical conductivity and power by including Co.

In some embodiments, the cathode active material or the lithium-transition metal composite oxide particle may further include a coating element or a doping element. For example, the coating element or doping element may include Al, Ti, Ba, Zr, Si, B, Mg, P, W, V, an alloy thereof, or an oxide thereof. These may be used alone or in combination thereof. The cathode active material particle may be passivated by the coating or doping element, thereby further improving stability and life-span even when a penetration of an external object occurs.

A slurry may be prepared by mixing and stirring the cathode active material with a binder, a conductive material and/or a dispersive agent in a solvent. The slurry may be coated on the cathode current collector 105, dried and pressed to form the cathode 100.

The cathode current collector 105 may include, e.g., stainless steel, nickel, aluminum, titanium, copper or an alloy thereof, preferably may include aluminum or an aluminum alloy.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

As described with reference to FIG. 1, the anode 130 may include an anode current collector 125 and an anode active material layer 120 having a multi-layered structure. For convenience of descriptions, detailed illustration of the first anode active material layer 122 and the second anode active material layer 124 is omitted in FIG. 3.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding of the separation layer 140.

The electrode assembly 150 may be accommodated together with an electrolyte in a case 160 to define the lithium secondary battery. In exemplary embodiments, a non-aqueous electrolyte may be used as the electrolyte.

For example, the non-aqueous electrolyte may include a lithium salt and an organic solvent. The lithium salt may be represented by Li⁺X⁻. An anion of the lithium salt X⁻ may include, e.g., F, Cl⁻ , Br⁻, I⁻, NO₃⁻ N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 2, an electrode tab (a cathode tab and an anode tab) may be formed from each of the cathode current collector 105 and the anode current collector 125 to extend to one end of the case 160. The electrode tabs may be welded together with the one end of the case 160 to be connected to an electrode lead (a cathode lead 107 and an anode lead 127) exposed at an outside of the case 160.

FIG. 2 illustrates that the cathode lead 107 and the anode lead 127 protrude from an upper side of the case 160 in a planar view, but locations of the electrode leads are not limited as illustrated in FIG. 2. For example, the electrode leads may protrude from at least one of both lateral sides of the case 160, or may protrude from a lower side of the case 160. Alternatively, the cathode lead 107 and the anode lead 127 may be formed to protrude from different sides of the case 160.

The lithium secondary battery may be fabricated into a cylindrical shape using a can, a prismatic shape, a pouch shape, a coin shape, etc.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples and Comparative Examples

### 1) Fabrication of anode

A primer solution containing 75 wt% of distilled water as a solvent and 25 wt% of styrene-butadiene rubber was prepared.

91.75 wt% of graphite and 6 wt% of silicon oxide (SiOx) as a first anode active material, 0.25 wt% of carbon nanotube (CNT) as a conductive material, and 2.0 wt% of a copolymer of polyacrylic acid (PAA) and polyvinyl alcohol (PVA) as a binder were mixed to form a first anode slurry.

85.75 wt% of graphite and 12 wt% of silicon oxide (SiOx) as a second anode active material, 0.25 wt% of carbon nanotube (CNT) as a conductive material, and 2.0 wt% of a copolymer of polyacrylic acid (PAA) and polyvinyl alcohol (PVA) as a binder were mixed to from a second anode slurry.

The primer solution was coated (0.1 mg/cm2) on a copper substrate, the first anode slurry was coated on the coated primer (4.65 mg/cm²), and a second anode slurry was coated on the first anode slurry (4.65 mg/cm²) continuously and simultaneously. Thereafter, drying and pressing were performed to prepare an anode.

A ratio of a content of the silicon-based active material included in a second anode active material layer relative to a content of the silicon-based active material included in a first anode active material layer among a total content of the silicon-based active material was adjusted to two.

### 2) Preparation of cathode and secondary battery

98.08 parts by weight of an NCM-based cathode active material, 0.6 parts by weight of a carbon black conductive material, 0.12 parts by weight of a dispersing agent, 1.2 parts by weight of a PVDF binder, and NMP were mixed to prepare a cathode slurry. The cathode slurry was coated on an aluminum substrate, dried and pressed to prepare a cathode.

The cathode and the anode prepared as described above were each notched with a predetermined size, and stacked with a separator (polyethylene, thickness: 13 µm) interposed between the cathode and the anode to form a battery cell, and each tab portion of the cathode and the anode was welded.

The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by forming 1M LiPF₆ solution in a mixed solvent of ethylene carbonate (EC)/ethyl methyl carbonate (EMC)/diethylene carbonate (DEC) (25/45/30; volume ratio), and then adding 5 wt% of fluorinated ethylene carbonate (FEC), 0.5 wt% of propane sultone (PS), and 0.5 wt% of ethylene sulfate (ESA).

### Examples 2-8

Lithium secondary batteries were fabricated by the same method as that in Example 1, except that a content of the silicon-based active material based on a total weight of the anode active material layer or a content ratio of the silicon-based active material between the first anode active material layer and the second anode active material layer were adjusted as shown in Table 1.

### Comparative Example 1

A lithium secondary battery was fabricated by the same method as that in Example 2, except that the primer layer was not formed, and 2.0 wt% of the copolymer of polyacrylic acid (PAA) and polyvinyl alcohol (PVA) copolymer and 1.0 wt% of styrene-butadiene rubber were included in the binder when preparing the first anode slurry and the second anode slurry.

### Comparative Example 2

A lithium secondary battery was fabricated by the same method as that in Example 1, except that the primer layer was not formed, and 2.0 wt% of the copolymer of polyacrylic acid (PAA) and polyvinyl alcohol (PVA) and 1.0 wt% of styrene-butadiene rubber were included in the binder when preparing the first anode slurry and the second anode slurry.

### Comparative Example 3

A lithium secondary battery was fabricated by the same method as that in Example 2, except that a primer solution including 74.2 wt% of distilled water as a solvent, 25 wt% of styrene-butadiene rubber, 0.5 wt% of CMC and 0.3 wt% of carbon black was used.

### Comparative Example 4

A lithium secondary battery was fabricated by the same method as that Example 6, except that a primer solution including 74.2 wt% of distilled water as a solvent, 25 wt% of styrene-butadiene rubber, 0.5 wt% of CMC and 0.3 wt% of carbon black was used.

### Comparative Example 5-6

Lithium secondary batteries were fabricated by the same method as that in Example 1, except that a content of the silicon-based active material based on a total weight of the anode active material layer or a content ratio of the silicon-based active material between the first anode active material layer and the second anode active material layer were adjusted as shown in Table 1.

### Experimental Example

### 1) Capacity Retention

After repeating charging (CC-CV 0.3 C 4.2V 0.05C CUT-OFF) and discharging (CC 0.5C 2.5V CUT-OFF) the lithium secondary battery according to the above-described Examples and Comparative Examples 200 times, each capacity retention was measured at room temperature by calculating a discharge capacity as a percentage relative to a discharge capacity at the 1st cycle.

### 2) Evaluation of electrical resistance (DC-IR) property

The lithium secondary batteries according to the above-described Examples and Comparative Examples were charged to SOC50 (50% charged state of a total charge capacity when the battery is charged and discharged at 4.2V; a full charged state is 100% of the total charge capacity of the battery), and then a voltage drop (V) generated while flowing a current for 10 seconds at a 1C-rate was measured. Based on a rate of a voltage change compared to a rate of a current change, a direct current internal resistance (DC-IR) was measured.

The evaluation results are shown in Table 1 below.

**[Table 1]**

| No. | primer layer | total content of SiOx (0<x<2) (wt%) | SiOx in the second anode active material layer based on a total weight of the anode active material layer (wt%) | SiOx in the first anode active material layer based on a total weight of the anode active material layer (wt%) | SiOx ratio (second anode active material layer/first anode active material layer) | capacity retention (200th 25 °C (%) | DC-IR (mohm) |
|---|---|---|---|---|---|---|---|
| Example 1 | SBR | 9 | 6 | 3 | 2 | 91.5 | 211.1 |
| Example 2 | SBR | 9 | 6.5 | 2.5 | 2.6 | 93.8 | 208.9 |
| Example 3 | SBR | 9 | 7 | 2 | 3.5 | 94.1 | 208.6 |
| Example 4 | SBR | 9 | 7.2 | 1.8 | 4.0 | 92.9 | 209.1 |
| Example 5 | SBR | 9 | 7.45 | 1.55 | 4.8 | 93.4 | 208.4 |
| Example 6 | SBR | 6 | 4 | 2 | 2 | 94.2 | 216.5 |
| Example 7 | SBR | 6 | 4.5 | 1.5 | 3 | 94.4 | 213.4 |
| Example 8 | SBR | 6 | 4.9 | 1.1 | 4.5 | 93.7 | 212.8 |
| Comparative Example 1 | X | 9 | 6.5 | 2.5 | 2.6 | 84.3 | 225.5 |
| Comparative Example 2 | X | 6 | 4 | 2 | 2 | 85.9 | 231.3 |
| Comparative Example 3 | SBR+CMC+ conductive material | 9 | 6.5 | 2.5 | 2.6 | 90.6 | 215.6 |
| Comparative Example 4 | SBR+CMC+ conductive material | 6 | 4 | 2 | 2 | 90.1 | 221.3 |
| Comparative Example 5 | SBR | 9 | 5 | 4 | 1.25 | 89.5 | 220.9 |
| Comparative Example 6 | SBR | 9 | 7.5 | 1.5 | 5 | 88.5 | 208.5 |

Referring to Table 1, in Examples where the SBR primer layer was formed on a surface of the anode active material layer, and the SiOx ratio of the second anode active material layer to the first anode active material layer was greater than 1.25 and less than 5, preferably 2 or more and less than 5, the capacity retention, rapid charging properties and low resistance propertied were all improved.

In Comparative Examples 1 and 2 where the primer layer was not included, the capacity retention, rapid charging properties and low resistance propertied were generally degraded compared to those from Examples.

In Comparative Examples 3 and 4 where the primer layer containing the conductive material was formed, an excessive amount of CMC was added to disperse the conductive material, and the binder content in the primer layer was increased. Thus, the primer layer acted as an insulating layer to increase the battery resistance and degrade the life-span properties.

In Comparative Examples 5 and 6 where the ratio of SiOx between the first anode active material layer and the second anode active material layer did not satisfy the range of Examples, the capacity retention and low resistance properties were deteriorated.

## Claims

1. An anode for a lithium secondary battery, comprising:
an anode current collector;
a primer layer formed on a surface of the anode current collector; and
an anode active material layer comprising a first anode active material layer and a second anode active material layer sequentially disposed on the primer layer, each of the first anode active material layer and the second anode active material layer including a silicon-based active material,
wherein a ratio of a content of the silicon-based active material in the second anode active material layer relative to a content of the silicon-based active material in the first anode active material layer among a total content of the silicon-based active material included in the anode active material layer is greater than 1.25 and less than 5, and
the first anode active material layer and the second anode active material layer each includes at least one binder selected from the group consisting of polyacrylic acid, polyvinyl alcohol, polyacrylonitrile, polyacrylamide, polyvinyl acetate and a copolymer thereof.

2. The anode for a lithium secondary battery of claim 1, wherein the ratio of the content of the silicon-based active material in the second anode active material layer relative to the content of the silicon-based active material in the first anode active material layer among the total content of the silicon-based active material included in the anode active material layer is 2 or more, and less than 5.

3. The anode for a lithium secondary battery of any one of claims 1 and 2, wherein the primer layer comprises a styrene-butadiene rubber.

4. The anode for a lithium secondary battery of claim 3, wherein an average loading weight of the primer layer is in a range from 0.1% to 20% of a total electrode loading weight.

5. The anode for a lithium secondary battery of claim 3, wherein an average loading weight of the primer layer is in a range from 0.5% to 10% of a total electrode loading weight.

6. The anode for a lithium secondary battery of any one of claims 1 to 5, wherein the primer layer does not include a conductive material.

7. The anode for a lithium secondary battery of any one of claims 1 to 6, wherein the silicon-based active material includes at least one selected from the group consisting of silicon (Si), a silicon alloy, a silicon oxide, a silicon-carbon (Si-C) composite and a silicon alloy-based carbon composite.

8. The anode for a lithium secondary battery of any one of claims 1 to 7, wherein a content of the silicon-based active material based on a total weight of the anode active material layer is in a range from 1 wt% to 20 wt%.

9. The anode for a lithium secondary battery of any one of claims 1 to 7, wherein a content of the silicon-based active material based on a total weight of the anode active material layer is in a range from 4 wt% to 15 wt%.

10. The anode for a lithium secondary battery of any one of claims 1 to 9, wherein each of the first anode active material layer and the second anode active material layer further includes a carbon-based active material.

11. The anode for a lithium secondary battery of claim 10, wherein a content of the carbon-based active material in a total weight of the first anode active material layer is greater than a content of the carbon-based active material in a total weight of the second anode active material layer.

12. A method of fabricating an anode for a lithium secondary battery, comprising:
preparing a primer solution, a first anode slurry and a second anode slurry, each of the first and second anode slurry including a silicon-based active material;
sequentially and continuously coating the primer solution, the first anode slurry and the second anode slurry on a current collector to form a preliminary primer layer, a preliminary first anode active material layer and a preliminary second anode active material layer; and
drying and pressing the preliminary primer layer, the preliminary first anode active material layer and the preliminary second anode active material layer to form a primer layer and an anode active material layer including a first anode active material layer and a second anode active material layer,
wherein a ratio of a content of the silicon-based active material in the second anode active material layer relative to a content of the silicon-based active material in the first anode active material layer among a total content of the silicon-based active material included in the anode active material layer is greater than 1.25 and less than 5.

13. The method of claim 12, wherein the primer solution includes a solvent and a styrene-butadiene rubber.

14. The method of claim 13, wherein the primer solution further includes a thickener.

15. The method of claim 12, wherein the primer solution includes a binder, and forming the anode active material layer comprises migrating the binder included in the primer layer to the anode active material layer.
